# EUROPÄISCHE PATENTSCHRIFT

(11) **EP 2 406 895 B1**
(45) Veröffentlichungstag und Bekanntmachung des Hinweises auf die Patenterteilung: **29.05.2013**
(21) Anmeldenummer: 10709796.6
(22) Anmeldetag: 08.03.2010
(51) Int. Cl.: H04B 7/185

(54) **SYSTEM UND METHODE ZUR SPRACH UND/ODER DATENKOMMUNIKATION**
SYSTEM AND METHOD FOR SPEECH AND/OR DATA COMMUNICATION
SYSTEME ET PROCÉDÉ DE COMMUNICATION ORALE ET/OU DE COMMUNICATION DE DONNÉES

(30) Priorität: 09.03.2009 DE 102009012721
(43) Veröffentlichungstag der Anmeldung: 18.01.2012
(73) Patentinhaber: Lufthansa Technik AG, 22335 Hamburg (DE)
(72) Erfinder: MUIRHEAD, Andrew, 22848 Norderstedt (DE)
(74) Vertreter: Glawe, Delfs, Moll
(86) Internationale Anmeldenummer: PCT/EP2010/001435
(87) Internationale Veröffentlichungsnummer: WO 2010/102771

(56) Entgegenhaltungen:
- EP-A2- 0 920 147
- US-B1- 6 754 489
- US-B1- 7 123 905

## Beschreibung

Die Erfindung betrifft ein System zur Sprach und/oder Datenkommunikation zwischen einem Mobiltelefon an Bord eines Flugzeuges und Endgeräten in Kommunikationsnetzwerken außerhalb des Flugzeugs.

Die Nutzung von Mobiltelefonen an Bord eines Flugzeuges ist technisch grundsätzlich möglich. WO 2005/041445 A1 beschreibt ein System, bei dem an Bord des Flugzeugs eine GSM Picozelle eingerichtet wird, in die sich ein Mobiltelefon einloggen kann. Über eine Satellitenverbindung, die das IP-Datenprotokoll nutzt, wird eine Verbindung zu einem GSM-Telefonnetz am Boden hergestellt.

EP 0 920 147 A2 offenbart ein Verfahren zum Aufbau einer Telefonkommunikationsverbindung zu Personen in Verkehrsmitteln. Dabei wird eine persönliche Rufnummer einer fest installierten Telekommunikationseinheit in dem Verkehrsmittel zugeordnet.

US 6,754,489 B1 betrifft die Sprach- und Datenkommunikation zwischen Personen an Bord eines Flugzeugs und dem Boden über ein Satellietenkommunikationssystem.

US 7,123,905 B1 betrifft eine Rufumleitung einer angewählten Mobilfunknummer zu einem Satellietentelefonsystem, das an Bord eines Flugzeugs fest installiert ist.

Dokumente D1 bis D3 sind in der Beschreibungseinleitung kurz erwähnt.

Der Erfindung liegt die Aufgabe zugrunde, ein System der eingangs genannten Art zu schaffen, das eine einfache und kostengünstige Kommunikation zwischen einem Mobiltelefon an Bord eines Flugzeuges und Endgeräten am Boden ermöglicht.

Das erfindungsgemäße System weist auf:
a) an Bord des Flugzeugs
   i) ein drahtloses Kommunikationsnetzwerk zur Kommunikation mit dem Mobiltelefon,
   ii) einen Kommunikationsserver, dem von außerhalb des Flugzeugs anwählbare Telefonnummern zugeordnet sind,
   iii) Sende/Empfangseinrichtungen zur Kommunikation mit einem bodenseitigen Kommunikationsnetzwerk;
b) einen Zuordnungsserver, der an Bord des Flugzeugs oder stationär am Boden angeordnet sein kann und der zur Zuordnung einer von außerhalb des Flugzeugs anwählbaren Telefonnummer des Kommunikationsservers zu einer Mobiltelefonnummer ausgebildet ist;
c) im Mobiltelefon eine Applikation mit folgenden Merkmalen:
   i) die Applikation ermöglicht dem Nutzer des Mobiltelefons eine Auswahl des Flugzeugs und/oder Flugs, in dem/auf dem er das Mobiltelefon nutzen möchte,
   ii) die Applikation ist zur Benachrichtigung des Zuordnungsservers über diese Auswahl ausgebildet,
   iii) sie ist zum Empfang einer vom Zuordnungsserver zugeordneten von außerhalb des Flugzeugs anwählbaren Telefonnummer des Kommunikationsservers ausgebildet,
sie ist zur Aktivierung einer Rufumleitung von der Mobiltelefonnummer auf die vom Zuordnungsserver zugeordnete von außerhalb des Flugzeugs anwählbare Telefonnummer des Kommunikationsservers ausgebildet, sobald sich das Mobiltelefon an Bord des Flugzeugs im Bereich des drahtlosen Kommunikationsnetzwerks dieses Flugzeugs zur Kommunikation mit dem Mobiltelefon befindet.

Zunächst seien einige im Rahmen der Erfindung verwendete Begriffe erläutert. Der Begriff Mobiltelefon bezeichnet jedwede mobile Sprach- und/oder Datenkommunikationseinrichtung, die von anderen Kommunikationsendgeräten mittels einer Telefonnummer anwählbar ist. Es handelt sich insbesondere um übliche Mobiltelefone oder sogenannte PDA's (Personal Digital Assistants).

Endgeräte in Kommunikationsnetzwerken außerhalb des Flugzeugs sind andere Mobiltelefone, Festnetztelefone oder entsprechende anwählbare Kommunikationsterminals in Netzwerken, insbesondere Festnetz- oder Mobiltelefonnetzwerken außerhalb des Flugzeugs.

An Bord des Flugzeugs ist ein drahtloses Kommunikationsnetzwerk zur Kommunikation mit dem Mobiltelefon vorhanden. Es kann sich hier insbesondere um eine lokale Zelle eines geeigneten Mobiltelefonnetzwerks handeln, beispielsweise um eine GSM oder UMTS Picozelle. Alternativ kann es sich auch um ein drahtloses Kommunikationsnetzwerk handeln, das nach anderen Datenprotokollen wie beispielsweise dem IP-Protokoll kommuniziert, insbesondere um ein WLAN.

An Bord des Flugzeugs ist ferner ein Kommunikationsserver angeordnet, dem von außerhalb des Flugzeugs anwählbare Telefonnummern zugeordnet sind. Es handelt sich hier um eine Datenverarbeitungseinrichtung, die die Kommunikation zwischen Endgeräten an Bord des Flugzeugs und bodenseitigen Kommunikationsnetzwerken vermittelt. Auf den von außen anwählbaren Telefonnummern ankommende Kommunikationsanfragen wie beispielsweise Telefonanrufe kann dieser Kommunikationsserver an Endgeräte an Bord des Flugzeugs vermitteln.

Ferner sind an Bord des Flugzeugs Sende-/Empfangseinrichtungen zur Kommunikation mit einem bodenseitigen Kommunikationsnetzwerk vorhanden. Es handelt sich hier vorzugsweise um geeignete und im Stand der Technik grundsätzlich bekannte Anlagen zur Datenkommunikation über Satellitennetzwerke.

Wahlweise an Bord des Flugzeugs oder außerhalb (insbesondere stationär am Boden) ist ein sogenannter Zuordnungsserver angeordnet. Dieser speichert eine Zuordnungstabelle, in der einer oder mehreren von außerhalb des Flugzeugs anwählbaren Telefonnummern des Kommunikationsservers eine oder mehrere Mobiltelefonnummern zugeordnet sein können. Der Zuordnungsserver kann Teil des Kommunikationsservers sein, er kann auch beispielsweise vom Betreiber des Flugzeugs, vom Betreiber des Satellitenkommunikationsnetzwerks oder von einem Mobiltelefonnetzbetreiber vorgehalten werden. Im Rahmen der Erfindung ist es beispielsweise auch möglich, die Zuordnungstabelle in einem stationären Zuordnungsserver zu erstellen, an einen zweiten Zuordnungsserver bzw. den Kommunikationsserver an Bord des Flugzeugs zu übermitteln und diese Tabelle dort zu spiegeln.

Im Mobiltelefon ist eine Applikation gespeichert, die einen bestimmten Betrieb bzw. Steuerung des Mobiltelefons ermöglicht. Mittels der Applikation kann der Nutzer des Mobiltelefons das Flugzeug oder den Flug auswählen, in dem bzw. auf dem er das Mobiltelefon nutzen möchte. Chartert der Nutzer beispielsweise einen sogenannten Business Jet, kann er dessen Flugzeugnummer in das Mobiltelefon eingeben. Nutzt er einen kommerziellen Linienflug, kann er diesen mittels der Flugnummer identifizieren. Die Auswahl bzw. Eingabe von Flugzeug oder Flugnummer ist nicht auf eine manuelle Eingabe beschränkt, stattdessen kann der Betreiber des Flugzeugs dem Nutzer des Mobiltelefons beispielsweise auch eine Datennachricht wie beispielsweise eine SMS mit der entsprechenden Identifizierungsnummer von Flugzeug oder Flug übermitteln.

Sobald eine entsprechende Auswahl getroffen ist, kann die Applikation den Zuordnungsserver über diese Auswahl benachrichtigen. Dabei nutzt die Applikation zur Benachrichtigung die Kommunikationsmöglichkeiten des Mobiltelefons und kann diese Benachrichtigung beispielsweise mittels einer automatisch versendeten SMS, MMS oder Email durchführen.

Der Zuordnungsserver erhält diese Benachrichtigung und ordnet der Mobiltelefonnummer eine von außerhalb des Flugzeugs anwählbare Telefonnummer des Kommunikationsservers des entsprechenden Flugzeugs zu. In der entsprechenden Zuordnungstabelle wird somit gespeichert, dass die Mobiltelefonnummer einer der Telefonnummern des Kommunikationsservers zugeordnet ist. Die Zuordnung erfolgt vorzugsweise für einen Zeitraum, der dem vorgesehenen Zeitraum des durchzuführenden Fluges oder ggf. auch nur einem Bruchteil davon entspricht. Auf diese Weise wird, wie unten näher geschildert, das Mobiltelefon während des Fluges oder eines entsprechenden Teilzeitraums des Fluges von außerhalb über die zugeordnete Telefonnummer des Kommunikationsservers anwählbar.

Die vom Zuordnungsserver zugeordnete anwählbare Telefonnummer des Kommunikationsservers wird dem Mobiltelefon bzw. dessen Applikation mitgeteilt, wiederum vorzugsweise mittels einer Datennachricht wie beispielsweise SMS, MMS oder Email. Das Mobiltelefon bzw. die Applikation kann zu diesem Zeitpunkt bereits eine Rufumleitung von der Mobiltelefonnummer auf die zugeordnete Telefonnummer des Kommunikationsservers vorbereiten, ohne diese bereits zu aktivieren. Begibt sich der Nutzer an Bord des Flugzeugs, wird eine Rufumleitung von der Mobiltelefonnummer auf die vom Zuordnungsserver zugeordnete von außerhalb des Flugzeugs anwählbare Telefonnummer des Kommunikationsservers eingerichtet bzw. diese entsprechend bereits vorbereitete Rufumleitung aktiviert. Nach der Aktivierung dieser Rufumleitung wird jeder Anruf eines Dritten an die Mobiltelefonnummer noch im Mobilfunknetz des Netzwerkbetreibers, mit dem der Nutzer einen Vertrag über die Nutzung des Mobiltelefons geschlossen hat, auf die Telefonnummer des Kommunikationsservers umgeleitet.

Wird nach dieser Aktivierung der Rufumleitung die Mobiltelefonnummer von einem Dritten angerufen, geschieht folgendes:
Bereits im sogenannten Heimatnetz des Mobiltelefons wird der Anruf mittels der geschalteten Rufumleitung auf die Telefonnummer des Kommunikationsservers umgeleitet. Über die Satellitenverbindung wird somit der Kommunikationsserver angewählt. Mittels der Zuordnungstabelle des Zuordnungsservers kann der auf der entsprechenden Telefonnummer des Kommunikationsservers eingehende Anruf einer Mobiltelefonnummer zugeordnet werden. Der Kommunikationsserver an Bord des Flugzeugs leitet diesen eingehenden Anruf über das drahtlose Kommunikationsnetzwerk an Bord des Flugzeugs an das entsprechende Mobiltelefon weiter.

Will der Nutzer des Mobiltelefons während des Fluges umgekehrt einen Anruf zu einem Dritten außerhalb des Flugzeugs tätigen, wählt er in üblicher Weise dessen Telefonnummer. Über das drahtlose Kommunikationsnetzwerk an Bord des Flugzeugs, den Kommunikationsserver und die Satellitenverbindung wird dieser Anruf in das entsprechende bodenseitige Kommunikationsnetzwerk vermittelt. Bei diesem aktiven Anrufen nach außerhalb wird die Infrastruktur des sogenannten Heimatnetzes des Mobiltelefonnutzers oder die Infrastruktur sogenannter Roaming-Netze (fremde Mobilfunknetze, mit deren Betreibern der Betreiber des Heimatnetzes Verträge über die Möglichkeit der Nutzung durch seine Kunden geschlossen hat) nicht genutzt. Der Anruf wird vollständig über die Kommunikationsinfrastruktur des drahtlosen Netzwerks an Bord des Flugzeugs und die Satellitenverbindung unmittelbar in das entsprechende angewählte Kommunikationsnetzwerk am Boden vermittelt.

Es ist in diesem Zusammenhang bevorzugt, wenn dabei ein sogenanntes Mapping der Mobiltelefonnummer auf die zur Vermittlung des Anrufs benutzte Telefonnummer des Kommunikationsservers erfolgt. Dies bedeutet, dass die Telefonnummer des Mobiltelefons (vorzugsweise unter Verwendung der Zuordnungstabelle im Zuordnungsserver) dem angerufenen Dritten übermittelt wird und bei der sogenannten Anruferidentifikation erscheint. Für den angerufenen Dritten ist es auf diese Weise nicht erkennbar, dass der Anruf über den Kommunikationsserver des Flugzeugs erfolgt, stattdessen sieht er die Telefonnummer des anrufenden Mobiltelefons.

Auf die gleiche Weise wie vorstehend für Telefonanrufe geschildert können während des Fluges Datennachrichten wie beispielsweise SMS, MMS, Email oder Faxe empfangen bzw. gesendet werden.

Die vorzugsweise über ein Satellitennetzwerk erfolgende drahtlose Kommunikation zwischen Flugzeug und Boden folgt vorzugsweise über ein geeignetes Datenprotokoll wie beispielsweise das IP-Protokoll. Der Kommunikationsserver an Bord des Flugzeugs kann dementsprechend für die sogenannte IP-Telefonie ausgebildet sein.

Wie vorstehend beschrieben, muss eine Rufumleitung von der Mobiltelefonnummer auf die zugeordnete Telefonnummer des Kommunikationsservers erfolgen, damit der Nutzer des Mobiltelefons während des Fluges über diese Telefonnummer des Kommunikationsserver erreichbar ist. Es kann vorgesehen sein, dass diese Rufumleitung vom Nutzer manuell vorgenommen wird, sobald er das Flugzeug betritt. Alternativ kann die Rufumleitung automatisch erfolgen, beispielsweise ausgelöst durch das Einloggen des Mobiltelefons in das drahtlose Kommunikationsnetzwerk des Flugzeugs. Die Aktivierung der Rufumleitung kann in diesem Fall beispielsweise von der Applikation des Mobiltelefons, vom Kommunikationsserver des Flugzeugs oder vom Zuordnungsserver ausgelöst werden.

Nach Beendigung des Fluges muss diese Rufumleitung deaktiviert werden, damit der Nutzer des Mobiltelefons wieder unmittelbar über seine Mobiltelefonnummer erreichbar ist. Auch diese Deaktivierung kann manuell erfolgen, alternativ ist wieder eine automatische Deaktivierung vorgesehen, nachdem das Mobiltelefon aus dem drahtlosen Kommunikationsnetzwerk des Flugzeugs ausgeloggt ist oder wieder in ein stationäres Mobilfunknetzwerk (das Heimatnetzwerk oder ein Roaming-Netzwerk) eingeloggt ist. Die Beendigung der Rufumleitung kann wieder unmittelbar vom Mobiltelefon bzw. der entsprechenden Applikation ausgelöst werden; alternativ ist es möglich, dass beispielsweise der Kommunikationsserver und/oder der Zuordnungsserver diese Beendigung der Rufumleitung direkt veranlassen, nachdem das Mobiltelefon aus dem drahtlosen Kommunikationsnetzwerk des Flugzeugs ausgeloggt ist und beispielsweise eine vorgegebene Zeitspanne von beispielsweise einigen Minuten verstrichen ist. Diese Deaktivierung der Rufumleitung kann wieder mittels geeigneter Datennachrichten wie beispielsweise eine SMS, MMS oder Email erfolgen.

Gegenstand der Erfindung ist ferner ein Verfahren zur Einrichtung einer Sprach- und/oder Datenkommunikationsmöglichkeit zwischen einem Mobiltelefon an Bord eines Flugzeuges und Endgeräten in Kommunikationsnetzwerken außerhalb des Flugzeugs unter Verwendung eines erfindungsgemäßen Systems. Das Verfahren weist die folgenden Schritte auf:
a) Auswahl des Flugzeugs und/oder Flugs, in dem/auf dem der Nutzer des Mobiltelefons das Mobiltelefon nutzen möchte mittels der Applikation des Mobiltelefons;
b) Benachrichtigung des Zuordnungsservers über diese Auswahl mittels der Applikation;
c) Zuordnung einer von außerhalb des Flugzeugs anwählbaren Telefonnummer des Kommunikationsservers des Flugzeugs zu dem Mobiltelefon und Senden dieser Telefonnummer an die Applikation des Mobiltelefons;
d) Aktivierung einer Rufumleitung von der Mobiltelefonnummer auf die vom Zuordnungsserver zugeordnete von außerhalb des Flugzeugs anwählbare Telefonnummer des Kommunikationsservers, sobald sich das Mobiltelefon an Bord des Flugzeugs im Bereich des drahtlosen Kommunikationsnetzwerks dieses Flugzeugs zur Kommunikation mit dem Mobiltelefon befindet.

In den Unteransprüchen 11 bis 15 sind bevorzugte Verfahrensvarianten genannt, die vorstehend bereits im Zusammenhang mit der Erläuterung des Systems beschrieben wurden.

Die Erfindung erlaubt eine für den Nutzer des Mobiltelefons weitgehend oder vollständig automatisch ablaufende Kommunikation mit Dritten am Boden während eines Fluges. Dabei kann er sein Mobiltelefon genauso nutzen, als wenn er sich am Boden im Bereich seines Heimatnetzwerks befände. Durch die Abwicklung der Kommunikation unmittelbar über die Satellitenkommunikationsstrecke zwischen Flugzeug und Boden unter Umgehung des Mobilfunkbetreibers, mit dem der Nutzer des Mobiltelefons einen Vertrag geschlossen hat, wird die Kommunikation kostengünstig, da etwaige Roaming-Gebühren für die Nutzung fremder Mobilfunknetze vermieden werden. Obwohl das Mobiltelefon während des Fluges weder in das Heimatnetzwerk des Mobilfunkbetreibers noch in ein vertraglich gebundenes Roaming-Netzwerk eines dritten Mobilfunkbetreibers eingeloggt ist, kann es aufgrund der geschalteten Rufumleitung zu der Telefonnummer des Kommunikationsservers so angewählt werden, als wenn es sich im Heimatnetzwerk befände. Kosten fallen somit ausschließlich an für die Nutzung der Satellitenkommunikationsverbindung zwischen Flugzeug und Boden sowie unter Umständen für die übliche Weiterleitung des Anrufs am Boden.

Während des Fluges nutzt somit der Mobiltelefonnutzer sein Telefon auf kostengünstige Weise außerhalb der eigentlich vorgesehenen Kommunikationsinfrastruktur (Heimatmobilfunknetzwerk bzw. entsprechende Roaming-Netze); durch die mittels der Zuordnungstabelle des Zuordnungsservers vorgenommene Rufumleitung wird jedoch gewissermaßen das Mobiltelefon für damit kommunizierende Dritte virtuell abgebildet.

Die weitgehende oder vollständige Automatisierung der geschilderten Abläufe mittels Kommunikationsserver, Zuordnungsserver und der Applikation auf dem Mobiltelefon erlaubt es, dass der Nutzer und mit ihm kommunizierende Dritte während des Fluges in gewohnter Weise miteinander kommunizieren können, ohne dass sich irgendein Teilnehmer dieser Kommunikation Gedanken darüber machen müsste, wo sich der Nutzer des Mobiltelefons gegenwärtig befindet und wie er konkret zu erreichen ist.

Ein Ausführungsbeispiel der Erfindung wird nachfolgend anhand der Zeichnungen erläutert. Darin zeigen schematisch:
- Fig. 1: die Kommunikation zwischen einem Mobiltelefon an Bord eines Flugzeugs und einem stationären Telefon am Boden mittels des erfindungsgemäßen Systems;
- Fig. 2: die Kommunikation zwischen Mobiltelefon und Zuordnungsserver zwecks Zuteilung einer von außerhalb des Flugzeugs anwählbaren Telefonnummer des Kommunikationsservers vor einem Flug.

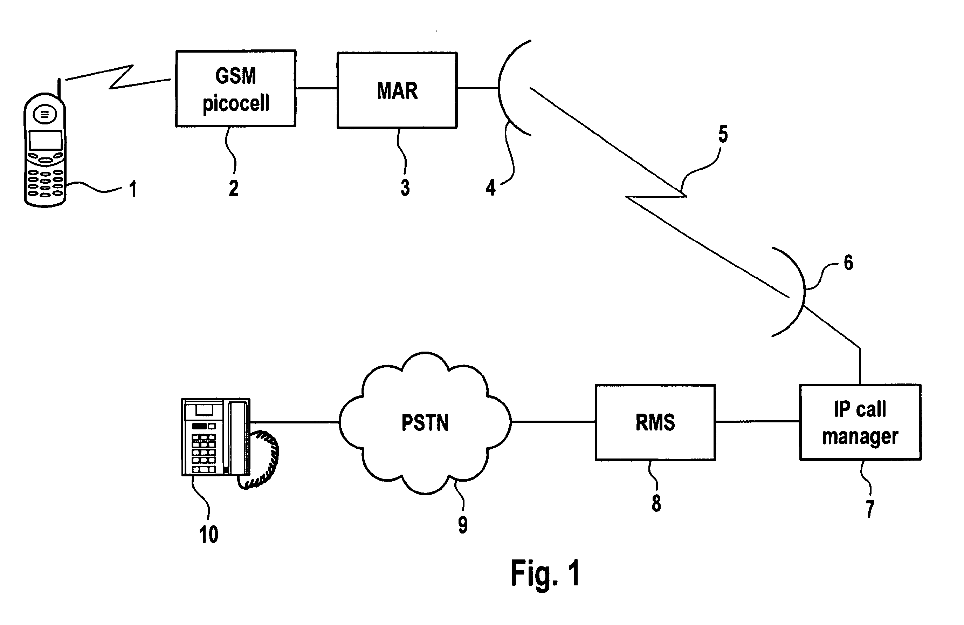

In Figur 1 ist ein Mobiltelefon 1 gezeigt, dass drahtlos mit einer GSM-Picozelle 2 an Bord eines Flugzeugs in Verbindung steht. Dieses Flugzeug befindet sich im Reiseflug. Die GSM-Picozelle 2 kommuniziert mit einem Kommunikationsserver 3 an Bord des Flugzeugs, der auch als Mobile Access Router (MAR) bezeichnet wird. Die Kommunikation kann beispielsweise über ein Intranet an Bord des Flugzeugs (drahtgebunden oder drahtlos) mittels des IP-Protokolls erfolgen. Der Kommunikationsserver 3 kommuniziert über eine Antenne 4 und eine schematisch durch 5 angedeutete drahtlose Verbindung (vorzugsweise Satellitenverbindung) mit einer Antenne 6 am Boden, die den Datenstrom über einen sogenannten IP Call Manager 7 leitet. Die mittels des IP Call Managers 7 aus dem IP Datenstrom "gefilterten" Kommunikationsdaten werden über den Zuordnungsserver 8 (Remote Monitoring Server, RMS) in das öffentliche Telefonnetz 9 geleitet (PSTN, Public Switched Telephone Network), an das der stationäre Kommunikationsteilnehmer 10 angeschlossen ist.

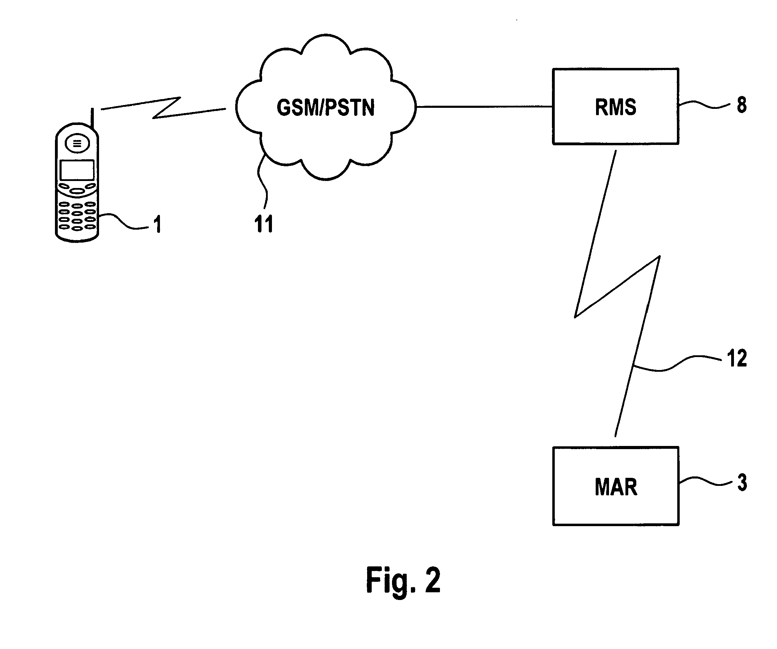

Figur 2 zeigt schematisch, wie das Mobiltelefon 1 am Boden befindlich über ein schematisch bei 11 angedeutetes öffentliches Mobilfunknetz mit dem Zuordnungsserver 8 in Verbindung steht, der wiederum über eine bevorzugt drahtlose Verbindung 12 mit dem Kommunikationsserver 3 des Flugzeugs kommuniziert. Die Verbindung 12 kann dabei identisch mit der in Figur 1 dargestellten Satellitenverbindung 5 sein; wahlweise kann es sich um eine andere Verbindung handeln, beispielsweise eine drahtlose oder drahtgebundene Verbindung mit dem am Gate parkenden Flugzeug.

Die Funktionsweise des erfindungsgemäßen Systems ist wie folgt. Bevor der Nutzer des Mobiltelefons 1 einen Flug antritt, auf dem er sein Mobiltelefon nutzen will, aktiviert er die auf dem Mobiltelefon installierte Applikation und gibt die Flugnummer und/oder Flugzeugnummer ein. Die Applikation sendet diese Information über das Telefonnetzwerk 11 an den Zuordnungsserver 8, der damit über die Nutzungsabsicht des Mobiltelefons 1 auf einem bestimmten Flug informiert wird. Diese Benachrichtigung wird im Ausführungsbeispiel per SMS oder Email versandt.

Der Zuordnungsserver 8 kommuniziert mit dem Kommunikationsserver 3 mittels der Verbindung 12 und veranlasst, dass der Telefonnummer des Mobiltelefons 1 eine von außerhalb anwählbare Telefonnummer des Kommunikationsservers 3 zugeordnet wird. Diese Zuordnung wird in einer entsprechenden Zuordnungstabelle des Zuordnungsservers 8 gespeichert. Die Zuordnung in der Tabelle wird mindestens über einen Zeitraum bis nach Durchführung des vorgesehenen Fluges gespeichert.

Der Zuordnungsserver 8 benachrichtigt das Mobiltelefon 1 bzw. dessen Applikation über die vorgenommene Zuordnung. Dies geschieht wieder mittels einer elektronischen Nachricht wie beispielsweise SMS oder Email. Die Applikation im Mobiltelefon 1 bereitet eine Rufumleitung von der Mobiltelefonnummer auf die zugeordnete Nummer des Kommunikationsservers 3 vor, ohne diese zu aktivieren.

Tritt der Nutzer des Mobiltelefons 1 den Flug an und begibt sich an Bord des Flugzeugs, gerät das Mobiltelefon 1 in Reichweite der GSM-Picozelle 2. Zu diesem Zeitpunkt kann die Rufumleitung von der Nummer des Mobiltelefons auf die zugeordnete Nummer des Kommunikationsservers 3 aktiviert werden. Diese Aktivierung der Rufumleitung kann manuell vom Benutzer des Mobiltelefons 1 ausgelöst werden, beispielsweise bevor er das Flugzeug betritt. Gleichfalls ist es möglich, die Rufumleitung automatisch auszulösen.

Wenn während des Flugs der Benutzer des Mobiltelefons 1 einen Anruf tätigt oder eine Nachricht verschickt, verläuft der Kommunikationsweg wie in Figur 1 dargestellt. Dabei wird in der Regel das sogenannte Heimatmobilfunknetz, in dem der Nutzer des Mobiltelefons 1 eine Subskription besitzt, vollständig umgangen. Ebenso wenig ist es nötig, für die Kommunikation beispielsweise Roaming-Mobilfunknetze von Ländern zu nutzen, die das Flugzeug gerade überfliegt. Stattdessen wird die Kommunikation vollständig über die in Figur 1 gezeigte Infrastruktur abgewickelt. Dabei ist es möglich, dass die bodenseitigen Elemente des Systems wie der gezeigte IP Call Manager 7, der Zuordnungsserver 8 etc. räumlich voneinander getrennt und durch geeignete Netzwerke wie beispielsweise das Internet verbunden sein können.

Ruft ein am Boden befindlicher Teilnehmer während des Flugs die Rufnummer des Mobiltelefons 1 an, wird aufgrund der vom Heimatnetzbetreiber des Nutzers des Mobiltelefons 1 geschalteten Rufumleitung dieser Anruf auf die Mobiltelefonnummer sofort auf die vom Zuordnungsserver 8 zugeordnete Rufnummer des Kommunikationsservers 3 umgeleitet. Der Kommunikationsserver 3 leitet den Anruf dann im Flugzeug mittels der GSM-Picozelle 2 an das Mobiltelefon 1 weiter, so dass das Mobiltelefon 1 den Anruf entgegennehmen kann.

Auf die gleiche Weise wie vorstehend für Telefonanrufe geschildert, können auch Nachrichten verschickt werden.

Vorzugsweise erfolgt mittels des Zuordnungsservers 8 ein sogenanntes Mapping der Nummer des Mobiltelefons 1 auf die zugeordnete Nummer des Kommunikationsservers 3, so dass der Teilnehmer 10 während des Telefonats in seinem Display die Mobilfunknummer des Mobiltelefons 1 sieht.

Verlässt nach Beendigung des Fluges der Nutzer des Mobiltelefons 1 mit seinem Mobiltelefon das Flugzeug und damit den Bereich der GSM-Picozelle 2 und loggt in das Heimatnetzwerk des Mobiltelefons 1 oder ein stationäres Roaming-Netzwerk ein, wird die Rufumleitung wieder deaktiviert. Die technischen Möglichkeiten zur Durchführung dieser Deaktivierung sind im allgemeinen Teil der Beschreibung detailliert erläutert.

## Patentansprüche

1. System zur Sprach- und/oder Datenkommunikation zwischen einem Mobiltelefon (1) an Bord eines Flugzeuges und Endgeräten 10) in Kommunikationsnetzwerken außerhalb des Flugzeugs, dass aufweist:
a) an Bord des Flugzeugs
i) ein drahtloses Kommunikationsnetzwerk (2) zur Kommunikation mit dem Mobiltelefon (1),
ii) einen Kommunikationsserver (3), dem von außerhalb des Flugzeugs anwählbare Telefonnummern zugeordnet sind,
iii) Sende/Empfangseinrichtungen (4) zur Kommunikation mit einem bodenseitigen Kommunikationsnetzwerk;
b) einen Zuordnungsserver (8), der an Bord des Flugzeugs oder stationär am Boden angeordnet sein kann und der zur Zuordnung einer von außerhalb des Flugzeugs anwählbaren Telefonnummer des Kommunikationsservers (3) zu einer Mobiltelefonnummer ausgebildet ist;
c) im Mobiltelefon (1) eine Applikation mit folgenden Merkmalen:
i) die Applikation ermöglicht dem Nutzer des Mobiltelefons (1) eine Auswahl des Flugzeugs und/oder Flugs, in dem/auf dem er das Mobiltelefon (1) nutzen möchte,
ii) die Applikation ist zur Benachrichtigung des Zuordnungsservers (8) über diese Auswahl ausgebildet,
iii) sie ist zum Empfang einer vom Zuordnungsserver (8) zugeordneten von außerhalb des Flugzeugs anwählbaren Telefonnummer des Kommunikationsservers (3) ausgebildet,
iv) sie ist zur Aktivierung einer Rufumleitung von der Mobiltelefonnummer auf die vom Zuordnungsserver (8) zugeordnete von außerhalb des Flugzeugs anwählbare Telefonnummer des Kommunikationsservers (3) ausgebildet, sobald sich das Mobiltelefon (1) an Bord des Flugzeugs im Bereich des drahtlosen Kommunikationsnetzwerks (2) dieses Flugzeugs zur Kommunikation mit dem Mobiltelefon (1) befindet.

2. System nach Anspruch 1, **dadurch gekennzeichnet, dass** das drahtlose Kommunikationsnetzwerk (2) zur Kommunikation mit dem Mobiltelefon an Bord des Flugzeugs ein GSM-Netzwerk oder ein IP-Netzwerk, insbesondere ein WLAN, ist.

3. System nach Anspruch 1 oder 2, **dadurch gekennzeichnet, dass** die Sende/Empfangseinrichtungen (4) an Bord des Flugzeugs zur Kommunikation mit einem bodenseitigen Kommunikationsnetzwerk zur IP-Datenkommunikation ausgebildet sind.

4. System nach einem der Ansprüche 1 bis 3, **dadurch gekennzeichnet, dass** der Kommunikationsserver (3) für
die IP-Telefonie ausgebildet ist.

5. System nach einem der Ansprüche 1 bis 4, **dadurch gekennzeichnet, dass** die Benachrichtigung gemäß Merkmal c) ii. und/oder der Empfang gemäß Merkmal c) iii. des Anspruchs 1 mittels einer Datennachricht, vorzugsweise SMS, MMS und/oder E-Mail erfolgt.

6. System nach einem der Ansprüche 1 bis 5, **dadurch gekennzeichnet, dass** die Aktivierung der Rufumleitung gemäß Merkmal c) iv. des Anspruchs 1 manuell durch den Nutzer des Mobiltelefons (1) erfolgt.

7. System nach einem der Ansprüche 1 bis 5, **dadurch gekennzeichnet, dass** die Aktivierung der Rufumleitung gemäß Merkmal c) iv. des Anspruchs 1 automatisch erfolgt, nachdem das Mobiltelefon in das drahtlose Kommunikationsnetzwerk (2) des Flugzeugs eingeloggt ist.

8. System nach einem der Ansprüche 1 bis 7, **dadurch gekennzeichnet, dass** die Applikation des Mobiltelefons (1) zur Deaktivierung der Rufumleitung ausgebildet ist, nachdem das Mobiltelefon aus dem drahtlosen Kommunikationsnetzwerk (2) des Flugzeugs ausgeloggt ist oder wieder in ein stationäres Mobilfunknetzwerk eingeloggt ist.

9. System nach Anspruch 8, **dadurch gekennzeichnet, dass** die Deaktivierung durch eine Datennachricht des Kommunikationsservers (3) oder Zuordnungsservers (8) an das Mobiltelefon (1) auslösbar ist.

10. Verfahren zur Einrichtung einer Sprach- und/oder Datenkommunikationsmöglichkeit zwischen einem Mobiltelefon (1) an Bord eines Flugzeuges und Endgeräten (10) in Kommunikationsnetzwerken außerhalb des Flugzeugs unter Verwendung eines Systems nach einem der Ansprüche 1 bis 9, mit Schritten:
a) Auswahl des Flugzeugs und/oder Flugs, in dem/auf dem der Nutzer des Mobiltelefons das Mobiltelefon (1) nutzen möchte mittels der Applikation des Mobiltelefons (1) ;
b) Benachrichtigung des Zuordnungsservers (8) über diese Auswahl mittels der Applikation;
c) Zuordnung einer von außerhalb des Flugzeugs anwählbaren Telefonnummer des Kommunikationsservers (3) des Flugzeugs zu dem Mobiltelefon (1) und Senden dieser Telefonnummer an die Applikation des Mobiltelefons
(1) ;
d) Aktivierung einer Rufumleitung von der Mobiltelefonnummer auf die vom Zuordnungsserver (8) zugeordnete von außerhalb des Flugzeugs anwählbare Telefonnummer des Kommunikationsservers (3), sobald sich das Mobiltelefon (1) an Bord des Flugzeugs im Bereich des drahtlosen Kommunikationsnetzwerks dieses Flugzeugs zur Kommunikation mit dem Mobiltelefon (1) befindet.

11. Verfahren nach Anspruch 10, **dadurch gekennzeichnet, dass** das Senden der von außerhalb des Flugzeugs anwählbaren Telefonnummer des Kommunikationsservers (3) an die Applikation des Mobiltelefons (1) mittels einer Datennachricht, vorzugsweise SMS, MMS und/oder E-Mail erfolgt.

12. Verfahren nach Anspruch 10 oder 11, **dadurch gekennzeichnet, dass** die Aktivierung einer Rufumleitung von der Mobiltelefonnummer auf die vom Zuordnungsserver (8) zugeordnete von außerhalb des Flugzeugs anwählbare Telefonnummer des Kommunikationsservers (3) manuell durch den Nutzer des Mobiltelefons (1) erfolgt.

13. Verfahren nach Anspruch 10 oder 11, **dadurch gekennzeichnet, dass** die Aktivierung einer Rufumleitung von der Mobiltelefonnummer auf die vom Zuordnungsserver zugeordnete von außerhalb des Flugzeugs anwählbare Telefonnummer des Kommunikationsservers (3) automatisch erfolgt, nachdem das Mobiltelefon (1) in das drahtlose Kommunikationsnetzwerk (2) des Flugzeugs eingeloggt ist.

14. Verfahren nach einem der Ansprüche 10 bis 13, **dadurch gekennzeichnet, dass** die Applikation des Mobiltelefons (1) die Rufumleitung deaktiviert, nachdem das Mobiltelefon (1) aus dem drahtlosen Kommunikationsnetzwerk (2) des Flugzeugs ausgeloggt ist oder wieder in ein stationäres Mobilfunknetzwerk eingeloggt ist.

15. Verfahren nach Anspruch 14, **dadurch gekennzeichnet, dass** die Deaktivierung durch eine Datennachricht des Kommunikationsservers (3) oder Zuordnungsservers (8) an das Mobiltelefon ausgelöst wird.

## Claims

1. System for voice and/or data communication between a mobile telephone (1) onboard an aircraft and terminals (10) in communication networks outside the aircraft, which has:
a) onboard the aircraft
i) a wireless communication network (2) for communication with the mobile telephone (1),
ii) a communication server (3) having allocated telephone numbers that can be dialled from outside the aircraft,
iii) transmission/reception devices (4) for communication with a ground-based communication network;
b) an allocation server (8) which may be arranged onboard the aircraft or statically on the ground and which is designed to allocate a telephone number for the communication server (3) that can be dialled from outside the aircraft to a mobile telephone number;
c) in the mobile telephone (1) an application having the following features:
i) the application allows the user of the mobile telephone (1) to select the aircraft and/or flight on which he wishes to use the mobile telephone (1),
ii) the application is designed to notify the allocation server (8) about this selection,
iii) it is designed to receive a telephone number for the communication server (3) that has been allocated by the allocation server (8) and that can be dialled from outside the aircraft,
iv) it is designed to activate call diversion from the mobile telephone number to the telephone number of the communication server (3) that has been allocated by the allocation server (8) and that can be dialled from outside the aircraft as soon as the mobile telephone (1) is onboard the aircraft in the range of the wireless communication network (2) of this aircraft for the purpose of communication with the mobile telephone (1).

2. System according to Claim 1, **characterized in that** the wireless communication network (2) for communication with the mobile telephone onboard the aircraft is a GSM network or an IP network, particularly a WLAN.

3. System according to Claim 1 or 2, **characterized in that** the transmission/reception devices (4) onboard the aircraft for communication with a ground-based communication network are designed for IP data communication.

4. System according to one of Claims 1 to 3, **characterized in that** the communication server (3) is designed for IP telephony.

5. System according to one of Claims 1 to 4, **characterized in that** the notification based on feature c) ii. and/or the reception based on feature c) iii. of Claim 1 is/are effected by means of a data message, preferably SMS, MMS and/or e-mail.

6. System according to one of Claims 1 to 5, **characterized in that** the activation of the call diversion based on feature c) iv. of Claim 1 is effected manually by the user of the mobile telephone (1).

7. System according to one of Claims 1 to 5, **characterized in that** the activation of the call diversion based on feature c) iv. of Claim 1 is effected automatically after the mobile telephone is logged into the wireless communication network (2) of the aircraft.

8. System according to one of Claims 1 to 7, **characterized in that** the application on the mobile telephone (1) is designed to deactivate the call diversion after the mobile telephone is logged out of the wireless communication network (2) of the aircraft or is logged into a static mobile radio network again.

9. System according to Claim 8, **characterized in that** the deactivation can be initiated by a data message from the communication server (3) or allocation server (8) to the mobile telephone (1).

10. Method for setting up a voice and/or data communication capability between a mobile telephone (1) onboard an aircraft and terminals (10) in communication networks outside the aircraft by using a system according to one of Claims 1 to 9, having the following steps:
a) selection of the aircraft and/or flight on which the user of the mobile telephone wishes to use the mobile telephone (1) by means of the application on the mobile telephone (1);
b) notification of the allocation server (8) about this selection by means of the application;
c) allocation of a telephone number for the communication server (3) of the aircraft that can be dialled from outside the aircraft to the mobile telephone (1) and transmission of this telephone number to the application on the mobile telephone (1);
d) activation of call diversion from the mobile telephone number to the telephone number of the communication server (3) that has been allocated by the allocation server (8) and that can be dialled from outside the aircraft as soon as the mobile telephone (1) is onboard the aircraft in the range of the wireless communication network of this aircraft for the purpose of communication with the mobile telephone (1).

11. Method according to Claim 10, **characterized in that** the transmission of the telephone number of the communication server (3) that can be dialled from outside the aircraft to the application on the mobile telephone (1) is effected by means of a data message, preferably SMS, MMS and/or e-mail.

12. Method according to Claim 10 or 11, **characterized in that** the activation of call diversion from the mobile telephone number to the telephone number of the communication server (3) that has been allocated by the allocation server (8) and that can be dialled from outside the aircraft is effected manually by the user of the mobile telephone (1).

13. Method according to Claim 10 or 11, **characterized in that** the activation of call diversion from the mobile telephone number to the telephone number of the communication server (3) that has been allocated by the allocation server and that can be dialled from outside the aircraft is effected automatically after the mobile telephone (1) is logged into the wireless communication network (2) of the aircraft.

14. Method according to one of Claims 10 to 13, **characterized in that** the application on the mobile telephone (1) deactivates the call diversion after the mobile telephone (1) is logged out of the wireless communication network (2) of the aircraft or is logged into a static mobile radio network again.

15. Method according to Claim 14, **characterized in that** the deactivation is initiated by a data message from the communication server (3) or allocation server (8) to the mobile telephone.

## Revendications

1. Système destiné à la communication vocale et/ou de données entre un téléphone mobile (1) à bord d'un avion et des terminaux (10) dans des réseaux de communication en dehors de l'avion, qui comprend :
a) à bord de avion :
i) n réseau de communication sans fil (2) destiné à la communication avec le téléphone mobile (1),
ii) un serveur de communication (3) auquel des numéros de téléphone pouvant être appelés depuis l'extérieur de l'avion sont attribués,
iii) des dispositifs d'envoi/de réception (4) destinés à la communication avec un réseau de communication au sol ;
b) un serveur d'attribution (8) qui peut être agencé à bord de l'avion ou en position fixe au sol et qui est conçu aux fins de l'attribution d'un numéro de téléphone du serveur de communication (3) pouvant être appelé depuis l'extérieur de l'avion à un numéro de téléphone mobile ;
c) dans le téléphone mobile (1), une application ayant les caractéristiques suivantes :
i) l'application permet à l'utilisateur du téléphone mobile (1) une sélection de l'avion et/ou du vol dans lequel/sur lequel il souhaite utiliser le téléphone mobile (1),
ii) l'application est conçue pour informer le serveur d'attribution (8) de cette sélection,
iii) elle est conçue pour recevoir un numéro de téléphone du serveur de communication (3) pouvant être appelé depuis l'extérieur de l'avion attribué par le serveur d'attribution (8),
iv) elle est conçue pour activer une déviation d'appel depuis le numéro de téléphone mobile vers le numéro de téléphone du serveur de communication (3) pouvant être appelé depuis l'extérieur de l'avion attribué par le serveur d'attribution (8) dès que le téléphone mobile (1) se trouve à bord de l'avion dans la zone du réseau de communication sans fil (2) de cet avion destiné à la communication avec le téléphone mobile (1).

2. Système selon la revendication 1, **caractérisé en ce que** le réseau de communication sans fil (2) destiné à la communication avec le téléphone sans fil à bord de l'avion est un réseau GSM ou un réseau IP, en particulier un WLAN.

3. Système selon la revendication 1 ou 2, **caractérisé en ce que** les dispositifs d'envoi/de réception (4) à bord de l'avion sont conçus aux fins de la communication avec un réseau de communication au sol destiné à la communication de données IP.

4. Système selon l'une des revendications 1 à 3, **caractérisé en ce que** le serveur de communication (3) est conçu pour la téléphonie IP.

5. Système selon l'une des revendications 1 à 4, **caractérisé en ce que** l'information selon la caractéristique c) ii) et/ou la réception selon la caractéristique c) iii) de la revendication 1 est réalisée au moyen d'un message de données, de préférence un SMS, un MMS et/ou un message de courrier électronique.

6. Système selon l'une des revendications 1 à 5, **caractérisé en ce que** l'activation de la déviation d'appel selon la caractéristique c) iv) de la revendication 1 est réalisée manuellement par l'utilisateur du téléphone mobile (1).

7. Système selon l'une des revendications 1 à 5, **caractérisé en ce que** l'activation de la déviation d'appel selon la caractéristique c) iv) de la revendication 1 est réalisée automatiquement après que le téléphone mobile est connecté au réseau de communication sans fil (2) de l'avion.

8. Système selon l'une des revendications 1 à 7, **caractérisé en ce que** l'application du téléphone mobile (1) est conçue pour désactiver la déviation d'appel après que le téléphone mobile est déconnecté du réseau de communication sans fil (2) de l'avion ou qu'il est à nouveau connecté dans un réseau de téléphonie mobile stationnaire.

9. Système selon la revendication 8, **caractérisé en ce que** la désactivation peut être déclenchée par un message de données du serveur de communication (3) ou du serveur d'attribution (8) au téléphone mobile (1).

10. Procédé destiné à la réalisation d'une possibilité de communication vocale et/ou de données entre un téléphone mobile (1) à bord d'un avion et des terminaux (10) dans des réseaux de communication en dehors de l'avion en utilisant un système selon l'une des revendications 1 à 9, comprenant les étapes suivantes :
a) sélection de l'avion et/ou du vol dans lequel/sur lequel l'utilisateur du téléphone mobile souhaite utiliser le téléphone mobile (1) au moyen de l'application du téléphone mobile (1) ;
b) information du serveur d'attribution (8) de cette sélection au moyen de l'application ;
c) attribution d'un numéro de téléphone du serveur de communication (3) de l'avion pouvant être appelé depuis l'extérieur de l'avion au téléphone mobile (1) et envoi de ce numéro de téléphone à l'application du téléphone mobile (1) ;
d) activation d'une déviation d'appel depuis le numéro du téléphone mobile vers le numéro de téléphone du serveur de communication (3) pouvant être appelé depuis l'extérieur de l'avion attribué par le serveur d'attribution (8) dès que le téléphone mobile (1) se trouve à bord de l'avion dans la zone du réseau de communication sans fil de cet avion destiné à la communication avec le téléphone mobile (1).

11. Procédé selon la revendication 10, **caractérisé en ce que** l'envoi du numéro de téléphone du serveur de communication (3) pouvant être appelé depuis l'extérieur de l'avion à l'application du téléphone mobile (1) est réalisé au moyen d'un message de données, de préférence un SMS, un MMS et/ou un message de courrier électronique.

12. Procédé selon la revendication 10 ou 11, **caractérisé en ce que** l'activation d'une déviation d'appel depuis le numéro du téléphone mobile vers le numéro de téléphone du serveur de communication (3) pouvant être appelé depuis l'extérieur de l'avion attribué par le serveur d'attribution (8) est réalisée manuellement par l'utilisateur du téléphone mobile (1).

13. Procédé selon la revendication 10 ou 11, **caractérisé en ce que** l'activation de la déviation d'appel depuis le numéro du téléphone mobile vers le numéro de téléphone du serveur de communication (3) pouvant être appelé depuis l'extérieur de l'avion attribué par le serveur d'attribution est réalisée automatiquement après que le téléphone mobile (1) est connecté au réseau de communication sans fil (2) de l'avion.

14. Procédé selon l'une des revendications 10 à 13, **caractérisé en ce que** l'application du téléphone mobile (1) désactive la déviation d'appel après que le téléphone mobile (1) est déconnecté du réseau de communication sans fil (2) de l'avion ou qu'il est à nouveau connecté dans un réseau de téléphonie mobile stationnaire.

15. Procédé selon la revendication 14, **caractérisé en ce que** la désactivation est déclenchée par un message de données du serveur de communication (3) ou du serveur d'attribution (8) au téléphone mobile.
